# EUROPEAN PATENT APPLICATION

(11) **EP 3 462 593 A1**
(43) Date of publication of application: **03.04.2019**
(21) Application number: 17194335.0
(22) Date of filing: 02.10.2017
(51) Int. Cl.: H02M 7/487, H02J 3/38, H02M 7/5387, H02M 1/12

(54) **ELECTRICAL INVERTER WITH LOW COMMON MODE VOLTAGE**

(71) Applicant: ABB Schweiz AG, 5400 Baden (CH)
(72) Inventor: Soeiro, Thiago Batista, 5242 Birr (CH); Canales, Francisco, 5405 Baden-Dättwil (CH)
(74) Representative: ABB Patent Attorneys

(57) **Abstract**

An electrical inverter (16) comprises a first half-bridge (32a) interconnecting a positive point (14a) and a negative point (14b) of a DC link (24) and providing a first phase output (18a); a second half-bridge (32b) interconnecting the positive point (14a) and the negative point (14b) of the DC link (24) and providing a second phase output (18b); a diode bridge (38) interconnected between the first phase output (18a) and the second phase output (18b) and having an upper auxiliary point (40a) and a lower auxiliary point (40b); an upper auxiliary switch (34e) interconnecting the upper auxiliary point (40a) with a neutral point (28) of the DC link (24); and a lower auxiliary switch (34f) interconnecting the lower auxiliary point (40b) with the neutral point (28) of the DC link (24).

## Description

### FIELD OF THE INVENTION

The invention relates to the field of electrical power conversion. In particular, the invention relates to an electrical inverter, a method of operating the electrical inverter, a controller for the electrical inverter, a use of the electrical inverter and a photo-voltaic panel arrangement.

### BACKGROUND OF THE INVENTION

For converting the DC voltage from a photo-voltaic panel into an AC voltage, which may be supplied to an electrical grid, a simple H-bridge inverter may be used. An H-bridge is composed of two parallel half-bridges, each of which comprises an upper and a lower switch, and may be operated with three voltage levels. Compared to conventional two-level switching, such a three-level operation has a relatively low current ripple.

Unfortunately, for an H-bridge inverter, this feature comes with the disadvantage of increasing the high-frequency common voltage noise emissions. This may increase the cost of an electrical filter for filtering this noise.

Several other inverter types of inverters may be operated with three-level modulation and also may mitigate the high frequency common mode emission in specific operation modes. However, for these inverter types, much more active switches may be needed to achieve a low common mode emission. Examples for such inverter types are T-type inverters and neutral-point-clamped inverters.

In EP 1 369 985 A2, an inverter is proposed, which adds to the conventional H-bridge two active switches and two diodes. This auxiliary circuit is used to separate the DC capacitor terminals from an inductance connected to the output of the inverter during the free-wheeling states of a three-level modulation.

In US 2005 0 286 281 A1, another inverter based on an H-bridge is shown, which is also adapted for separating a DC capacitor terminal from a grid inductance during free-wheeling.

### DESCRIPTION OF THE INVENTION

It may be an objective of the invention to provide a simple and economic three-level inverter with low common mode noise.

This objective is achieved by the subject-matter of the independent claims. Further exemplary embodiments are evident from the dependent claims and the following description.

An aspect of the invention relates to an electrical inverter, which comprises an H-bridge and a further auxiliary circuit for connecting a midpoint or neutral point of a split DC link to phase outputs of the electrical inverter during a free-wheeling state.

According to an embodiment of the invention, the H-bridge comprises a first half-bridge, which interconnects a positive point and a negative point of the DC link and which provides a first phase output, and a second half-bridge, which interconnects the positive point and the negative point of the DC link and which provides a second phase output.

According to an embodiment of the invention, the auxiliary circuit comprises a diode bridge, which is interconnected between the first phase output and the second phase output and which has an upper auxiliary point and a lower auxiliary point, an upper auxiliary switch interconnecting the upper auxiliary point with a neutral point of the DC link and a lower auxiliary switch interconnecting the lower auxiliary point with a neutral point of the DC link.

The diode bridge may be adapted to rectify the two polarities of an output voltage between the phase outputs into a voltage of one polarity provided between the upper and the lower auxiliary point. In the case of a free-wheeling state of the electrical inverter, when the output voltage is substantially zero, the auxiliary switches may connect the neutral point of the DC link to the upper and lower auxiliary points. In such a way, the phase outputs are connected to the neutral point during free-wheeling.

The auxiliary circuit may mitigate high-frequency common-mode emissions that would be produced by the H-bridge alone. During the free-wheeling state, the diode bridge and two auxiliary switches are used to disconnect the positive and negative points of the DC link from the phase outputs. The neutral point of the DC link stays connected to the output phases. This may result in a low common mode voltage noise, since during free-wheeling, both voltages of the phase outputs are substantially equal to the neutral point voltage.

It has to be noted that the common mode voltage may be defined as the average of the voltages at the phase outputs relative to the neutral point. On the other hand, the differential mode voltage may be the output voltage of the electrical converter, i.e. the difference of the voltages at the phase outputs.

Additionally, compared to an H-bridge alone, there may be a better distribution of stress across semiconductors used in the electrical inverter. This may be used to reduce the overall losses allowing the utilization of smaller heat sinks, leading to a reduced weight and/or increased lifetime.

Compared to the inverter of EP 1 369 985 A2, two active switches, i.e. switches that may be switched to be conducting, only need to block half of a DC link voltage. In EP 1 369 985 A2, the active switches may need to block the full DC link voltage. A lower blocking voltage requirement typically allows the selection of semiconductors with lower costs, and much better loss features for both, conduction and switching losses.

Compared to the other inverters mentioned above, less active switches and isolated gate drivers may be necessary, which also may reduce the cost of the inverter.

According to an embodiment of the invention, a switchable conduction direction of the upper auxiliary switch is from the upper auxiliary point to the neutral point. The switches as described herein may be switchable by a signal, which controls, whether the switch is conducting or not in at least one direction. In the other direction, the switch may be always conducting. A conduction direction may be defined in that the switch has a very low resistance, when a positive voltage is applied to the switch in the direction.

Analogously, a switchable conduction direction of the lower auxiliary switch may be from the neutral point to the lower auxiliary point.

According to an embodiment of the invention, the upper auxiliary switch comprises a semiconductor switch and optionally an antiparallel diode. Also, the lower auxiliary switch may comprise a semiconductor switch and optionally an antiparallel diode. The auxiliary switches and/or the switches of the H-bridge may comprise transistors or thyristors, such as IGBTs, IGCT, etc., as semiconductor switches.

According to an embodiment of the invention, the diode bridge may comprise four diodes and/or may be composed solely of diodes. In particular, the diode bridge may comprise a first upper diode interconnecting the first phase output with the upper auxiliary point in its conducting direction; a second upper diode interconnecting the second phase output with the upper auxiliary point in its conducting direction; a first lower diode interconnecting the lower auxiliary point with the first phase output in its conducting direction; and a second lower diode interconnecting the lower auxiliary point with the second phase output in its conducting direction.

According to an embodiment of the invention, the first-half-bridge comprises an upper switch and a lower switch, which are series-connected and provide the first phase output between them. Analogously, the second half-bridge may comprise an upper switch and a lower switch, which are series-connected and provide the second phase output between them. It has to be noted that also the auxiliary switches may be series-connected via the neutral point of the DC link. In such a way, the electrical inverter may be composed of three half-bridge modules, each of which comprises two series-connected switches.

According to an embodiment of the invention, the upper switches and the lower switches have a switchable conduction direction between the positive point and the negative point of the DC link. In such a way, the phase outputs may be connected to the DC link in parallel and antiparallel by accordingly switching the switches.

According to an embodiment of the invention, each of the upper switches and the lower switches comprises a semiconductor switch and an antiparallel diode. The switches of the H-bridge may comprise the same semiconductor switches with the same voltage rating as the auxiliary switches.

According to an embodiment of the invention, an electrical filter is connected in the first and/or second phase output. The electrical filter may be connected between the phase outputs and an electrical grid. For example, an inductor may be connected in the first phase output or in the second phase output. It also may be possible that an inductor is connected in both phase outputs.

According to an embodiment of the invention, the DC link comprises two series-connected capacitors, which provide the neutral point between them. The capacitors may have the same voltage rating and/or the same capacity. Each of the capacitors may provide half of the DC link voltage.

Further aspects of the invention relate to a method of operating the electrical inverter as described in the above and in the following and to a controller for an electrical inverter adapted for performing the method. For example, the controller may comprise a CPU, which produces switching signals for the switches with a computer program running in the CPU. However, it is also possible that the method is implemented in hardware in the controller.

In the method, the switches of the inverter, i.e. the upper switch and the lower switch of the first half-bridge, the upper switch and the lower switch of the second half-bridge, the upper auxiliary switch and the lower auxiliary switch, are switched in such a way, that during free-wheeling, the phase outputs are connected with the auxiliary circuit to the neutral point of the DC link.

According to an embodiment of the invention, in a positive switching state, the upper switch of the first half-bridge and the lower switch of the second half-bridge are closed, while the lower switch of the first half-bridge, the upper switch of the second half-bridge, the upper auxiliary switch and the lower auxiliary switch are opened. It has to be noted that the term "closed" may mean that the corresponding switch is switched into a conducting state in its switchable conduction direction. It may be that also in the opened state, a switch may be conducting in a direction opposite to its conduction direction.

According to an embodiment of the invention, in a negative switching state, the lower switch of the first half-bridge and the upper switch of the second half-bridge are closed, while the upper switch of the first half-bridge, the lower switch of the second half-bridge, the upper auxiliary switch and the lower auxiliary switch are opened.

According to an embodiment of the invention, in a free-wheeling switching state, at least one of the upper auxiliary switch and the lower auxiliary switch is closed, while the upper switch and the lower switch of the first half-bridge and the upper switch and the lower switch of the second half-bridge are opened. Depending on the polarity of a voltage between the upper and lower auxiliary point, it may be possible to close only one of the auxiliary switches in a free-wheeling switching state and to keep the other one opened.

According to an embodiment of the invention, in a free-wheeling switching state, the upper auxiliary switch and the lower auxiliary switch are closed. It also may be that both auxiliary switches are closed during free-wheeling. This may result in a rather simple switching scheme.

According to an embodiment of the invention, the electrical inverter is switched, such that a free-wheeling state is present between two positive and/or negative switching states. It may be that the output current is modulated by switching the output voltage on in short intervals. Between such intervals, the output voltage may be zero and the inverter may be in the free-wheeling switching state.

According to an embodiment of the invention, the positive switching state, the negative switching state and the free-wheeling switching state are chosen according to pulse width modulation of a sinusoidal reference voltage. This may result in a free-wheeling switching state between two positive and/or negative switching states.

A further aspect of the invention relates to a photo-voltaic panel arrangement, which comprises an electrical inverter as described in the above and in the following and at least one photo-voltaic panel connected in parallel to the DC link. The DC voltage from the at least one photo-voltaic panel may be converted into an AC voltage to be supplied to an electrical grid. Due to the auxiliary circuit, only low common mode noise may be introduced into the electrical grid.

A further aspect of the invention relates to a use of an electrical inverter as described in the above and in the following for converting a DC voltage from at least one photo-voltaic panel into an AC voltage supplied to an electric grid. Due to its simple design and the simple switching scheme, the electrical converter may be especially suited for a mass market product, such as photo-voltaic energy conversion.

It has to be understood that features of the method, the controller and the use as described in the above and in the following may be features of the electrical inverter as described in the above and in the following, and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a photo-voltaic panel arrangement with an electrical inverter according to an embodiment of the invention.
Fig. 2 shows diagrams with voltages and currents produced during the operation of electrical inverter of Fig. 1.
Fig. 3 schematically shows a positive switching state during a method for operating an electrical inverter according to an embodiment of the invention.
Fig. 4 schematically shows a free-wheeling switching state during a method for operating an electrical inverter according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

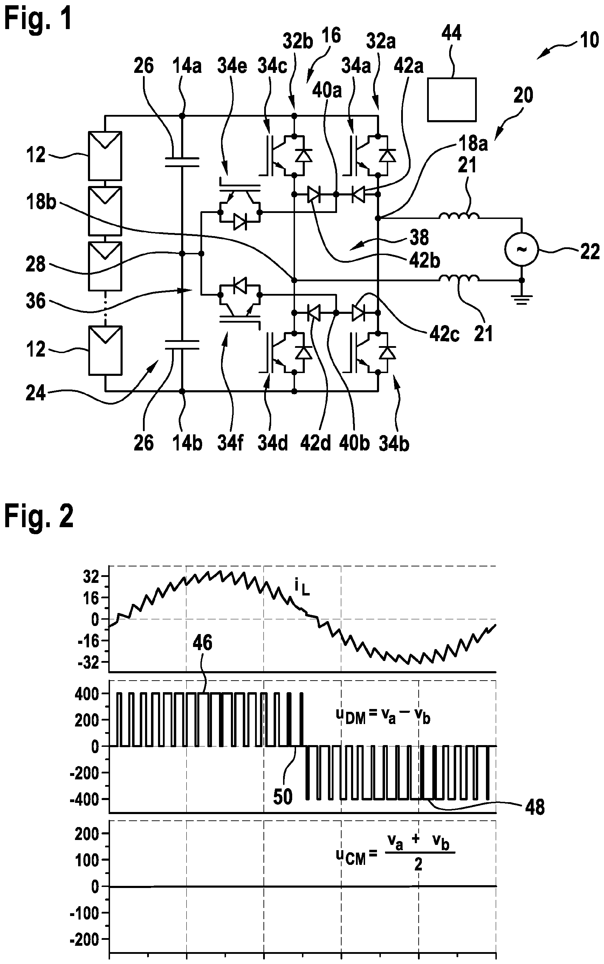

Fig. 1 shows a photo-voltaic panel arrangement 10 comprising a plurality of series-connected photo-voltaic panels 12, which are connected in parallel to the DC inputs 14a, 14b of an electrical inverter 16. The phase outputs 18a, 18b of the electrical inverter are connected via an output filter 20 with an electrical grid 22. The output filter 20 may comprise an inductor 21 in one of the phase outputs 18a, 18b and/or an inductor 21 for every phase output 18a, 18b.

The electrical inverter 16 comprises a DC link 24 with two series-connected DC link capacitors 26, which are connected between a positive point 14a providing an DC input 14a and a negative point 14b providing a further DC output 14b. The DC link capacitors 26 provide a neutral point 28 between them.

The electrical inverter 16 furthermore comprises an H-bridge 30, which is connected between the DC link 24 and the filter 20. The H-bridge 30 comprises a first half-bridge 32a, composed of an upper switch 34a and a lower switch 34b, which are series-connected, and a second half-bridge 32b, composed of an upper switch 34c and a lower switch 34d, which are series-connected. The half-bridges 32a, 32b are connected in parallel to the DC inputs 14a, 14b of the DC link 24. The first half-bridge 32a provides a first phase output 18a between its switches 34a, 34b. The second half-bridge 32a provides a second phase output 18b between its switches 34c, 34d. The upper switches 34a, 34c and the lower switches 34b, 34d have a switchable conduction direction between the positive point 14a and the negative point 14b of the DC link 24.

Additionally, the electrical inverter comprises an auxiliary circuit 36, which comprises a diode bridge 38 and two auxiliary switches 34e, 34f. The diode bridge 38 is interconnected between the first phase output 18a and the second phase output 18b and has an upper auxiliary point 40a and a lower auxiliary point 40b. The upper auxiliary switch 34e interconnects the upper auxiliary point 40a with the neutral point 28 of the DC link 24 and the lower auxiliary switch 34f interconnects the lower auxiliary point 40b with the neutral point 28 of the DC link 24.

The diode bridge 38 is adapted for rectifying a voltage of different polarity between the phase outputs 18a, 18b into a voltage of one polarity provided between the auxiliary points 40a, 40b. To this end, the diode bridge 38 comprises a first upper diode 42a interconnecting the first phase output 18a with the upper auxiliary point 40a in its conducting direction, a second upper diode 42b interconnecting the second phase output 18b with the upper auxiliary point 40a in its conducting direction, a first lower diode 42c interconnecting the lower auxiliary point 40b with the first phase output 18a in its conducting direction, and a second lower diode 42d interconnecting the lower auxiliary point 40b with the second phase output 18b in its conducting direction.

The upper auxiliary switch 34e and the lower auxiliary switch 34f are series-connected via the neutral point 28. The switchable conduction direction of the upper auxiliary switch 34e is from the upper auxiliary point 40a to the neutral point 28 and the switchable conduction direction of the lower auxiliary switch 34f is from the neutral point 28 to the lower auxiliary point 40b. In such a way, the neutral point 28 may be connected with the auxiliary points 40a, 40b, which via the diode bridge 38 provide the rectified phase output voltage. The phase outputs 18a, 18b may be set to the same voltage and additionally to the neutral point voltage of the DC link 24.

Every switch 34a to 34f is composed of a semiconductor switch and an antiparallel diode. The diodes of the auxiliary switches 34e, 34f may not be necessary, i.e. each of these switches 34e, 34f may comprise solely a semiconductor switch with one conduction direction.

The switch 34a to 34f and in particular the semiconductor switches are controlled by a controller 44 of the electrical inverter 16, which may measure currents and/or voltages in the electrical inverter 16 and may switch the switches 34a to 34f as described in the above and the below.

Fig. 2 shows three diagrams with the output current i_{L} in the phase outputs 18a, 18b, the output or differential mode voltage u_{DM} between the phase outputs 18a, 18b and the common mode voltage u_{CM} of the phase outputs 18a, 18b. The differential mode voltage u_{DM} is the difference of the phase output voltage vₐ of the first phase output 18a (for example relative to the neutral point 28) and the phase output voltage v_{b} of the second phase output 18b (for example relative to the neutral point 28). The common mode voltage u_{CM} is the average of the phase output voltage vₐ of the first phase output 18a and the phase output voltage v_{b} of the second phase output 18b.

As can be seen in the middle part of Fig. 2, the switches 34a to 34f of the inverter 16 are switched with pulse width modulation to produce a three-level output voltage u_{DM}. The upper part of Fig. 2 shows, that this produces a substantially sinusoidal output current i_{L}. In a positive switching state 46, the output voltage u_{DM} is equal to the DC link voltage. In a negative switching state 48, the output voltage u_{DM} is equal to the negative of the DC link voltage. In a free-wheeling switching state 50, the output voltage u_{DM} is zero.

Since during the free-wheeling switching state, the switches 34e and 34f are switched into a conducting state, the phase outputs 18a, 18b are connected with the neutral point 28 and the common mode output voltage u_{CM} is zero or at least constant, when determined with respect to another potential as the neutral point 28. No common mode noise is produced, which may disturb the electrical grid 22.

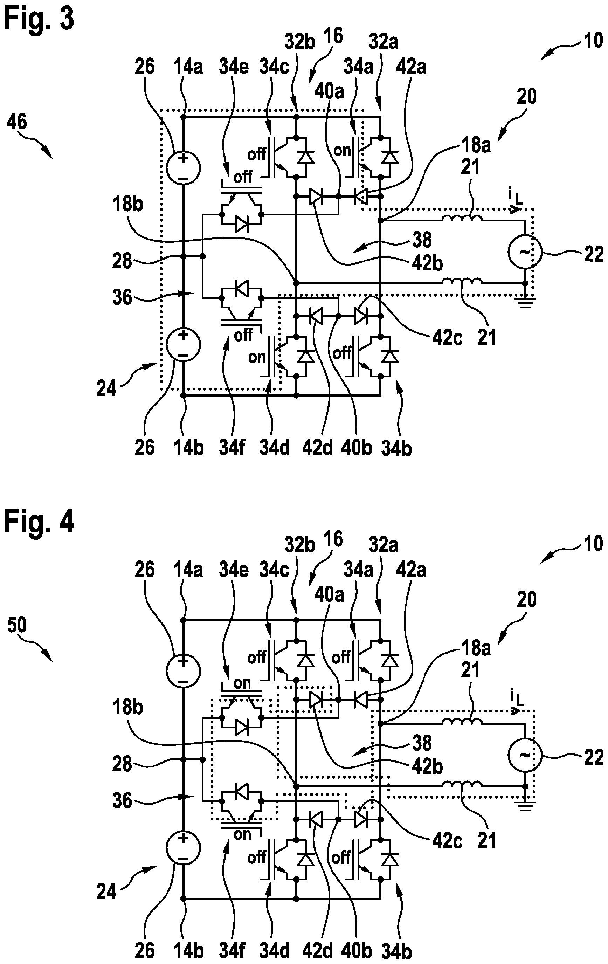

A method for operating the inverter 16, which may be performed by the controller 44, will be described additionally with respect to Fig. 3 and 4.

As already mentioned, the switches 34a, 34b, 34c and 34d may be switched, that the positive switching state 46, the negative switching state 48 and the free-wheeling switching state 50 are chosen according to pulse width modulation of a sinusoidal reference voltage. A free-wheeling switching state 50 is present between two positive and/or negative switching states 46, 48.

A positive switching state 46 is shown in Fig. 3, the upper switch 34a of the first half-bridge 32a and the lower switch 34d of the second half-bridge 32b are closed or "on", while the lower switch 34b of the first half-bridge 32a, the upper switch 34c of the second half-bridge 32b, the upper auxiliary switch 34e and the lower auxiliary switch 34f are opened or "off".

Fig. 3 shows, how the output current i_{L} runs through the inverter 16 during the positive switching state 46.

Analogously, in a negative switching state, the lower switch 34b of the first half-bridge 32a and the upper switch 34c of the second half-bridge 32b are closed or "on", while the upper switch 34a of the first half-bridge 32a, the lower switch 34d of the second half-bridge 32b, the upper auxiliary switch 34e and the lower auxiliary switch 34f are opened or "off.

Fig. 4 shows a free-wheeling switching state, in which the upper auxiliary switch 34e and the lower auxiliary 34f switch are closed or "on", while the upper switch 34a and the lower switch 34b of the first half-bridge 32a and the upper switch 34c and the lower switch 34d of the second half-bridge 32b are opened or "off".

Fig. 4 shows, how the output current i_{L} runs through the inverter 16 during the free-wheeling switching state 50.

It has to be noted that the electrical inverter 16 disclosed herein also may be used for rectifying an AC voltage into a DC voltage, which is supplied to a load.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: photo-voltaic panel arrangement
- 12: photo-voltaic panel
- 14a: positive point, first DC input
- 14b: negative point, second DC input
- 16: electrical inverter
- 18a: first phase output
- 18b: second phase output
- 20: output filter
- 21: inductor
- 22: electrical grid
- 24: DC link
- 26: DC link capacitor
- 28: neutral point
- 30: H-bridge
- 32a: first half-bridge
- 32b: second half-bridge
- 34a: upper switch of first half-bridge
- 34b: lower switch of first half-bridge
- 34c: upper switch of second half-bridge
- 34d: lower switch of second half-bridge
- 34e: upper auxiliary switch
- 34f: lower auxiliary switch
- 36: auxiliary circuit
- 38: diode bridge
- 40a: upper auxiliary point
- 40b: lower auxiliary point
- 42a: first upper diode
- 42b: second upper diode
- 42c: first lower diode
- 42d: second lower diode
- 44: controller
- i_{L}: output current
- u_{DM}: differential mode output voltage
- u_{CM}: common mode output voltage
- vₐ: first phase output voltage
- v_{b}: second phase output voltage
- 46: positive switching state
- 48: negative switching state
- 50: free-wheeling switching state

## Claims

1. An electrical inverter (16), comprising:
a first half-bridge (32a) interconnecting a positive point (14a) and a negative point (14b) of a DC link (24) and providing a first phase output (18a);
a second half-bridge (32b) interconnecting the positive point (14a) and the negative point (14b) of the DC link (24) and providing a second phase output (18b);
a diode bridge (38) interconnected between the first phase output (18a) and the second phase output (18b) and having an upper auxiliary point (40a) and a lower auxiliary point (40b);
an upper auxiliary switch (34e) interconnecting the upper auxiliary point (40a) with a neutral point (28) of the DC link (24);
a lower auxiliary switch (34f) interconnecting the lower auxiliary point (40b) with the neutral point (28) of the DC link (24).

2. The electrical inverter (16) of claim 1,
wherein a switchable conduction direction of the upper auxiliary switch (34e) is from the upper auxiliary point (40a) to the neutral point (28),
wherein a switchable conduction direction of the lower auxiliary switch (34f) is from the neutral point (28) to the lower auxiliary point (40b).

3. The electrical inverter (16) of claim 1 or 2,
wherein the upper auxiliary switch (34e) comprises a semiconductor switch; and/or
wherein the upper auxiliary switch (34e) comprises a diode antiparallel to a semiconductor switch; and/or
wherein the lower auxiliary switch (34f) comprises a semiconductor switch; and/or wherein the lower auxiliary switch (34f) comprises a diode antiparallel to a semiconductor switch.

4. The electrical inverter (16) of one of the previous claims,
wherein the diode bridge (38) comprises:
a first upper diode (42a) interconnecting the first phase output (18a) with the upper auxiliary point (40a) in its conducting direction;
a second upper diode (42b) interconnecting the second phase output (18b) with the upper auxiliary point (40a) in its conducting direction;
a first lower diode (42c) interconnecting the lower auxiliary point (40b) with the first phase output (18a) in its conducting direction;
a second lower diode (42d) interconnecting the lower auxiliary point (40b) with the second phase output (18b) in its conducting direction.

5. The electrical inverter (16) of one of the previous claims,
wherein the first-half-bridge (32a) comprises an upper switch (34a) and a lower switch (34b), which are series-connected and provide the first phase output (18a) between them;
wherein the second half-bridge (32b) comprises an upper switch (34c) and a lower switch (34d), which are series-connected and provide the second phase output (18b) between them.

6. The electrical inverter (16) of claim 5,
wherein the upper switches (34a, 34c) and the lower switches (34b, 34d) have a switchable conduction direction between the positive point (14a) and the negative point (14b) of the DC link (24); and/or
wherein each of the upper switches (34a, 34c) and the lower switches (34b, 34d) comprises a semiconductor switch and an antiparallel diode.

7. The electrical inverter (16) of one of the previous claims,
wherein an electrical filter (20) is connected in the first and/or second phase output (18a, 18b).

8. The electrical inverter (16) of one of the previous claims,
wherein the DC link (24) comprises two series-connected capacitors (26), which provide the neutral point (28) between them.

9. A method of operating an electrical inverter (16) according to one of the previous claims, in which an upper switch (34a) and a lower switch (34b) of the first half-bridge (32a), an upper switch (34c) and a lower switch (34d) of the second half-bridge (32b), the upper auxiliary switch (34e) and the lower auxiliary switch (34f) are switched, such that:
in a positive switching state (46), the upper switch (34a) of the first half-bridge (32a) and the lower switch (34d) of the second half-bridge (32b) are closed, while the lower switch (34b) of the first half-bridge (32a), the upper switch (34c) of the second half-bridge (32b), the upper auxiliary switch (34e) and the lower auxiliary switch (34f) are opened;
in a negative switching state (48), the lower switch (34b) of the first half-bridge (32a) and the upper switch (34c) of the second half-bridge (32b) are closed, while the upper switch (34a) of the first half-bridge (32a), the lower switch (34d) of the second half-bridge (32b), the upper auxiliary switch (34e) and the lower auxiliary switch (34f) are opened;
in a free-wheeling switching state (50), at least one of the upper auxiliary switch (34e) and the lower auxiliary switch (34f) is closed, while the upper switch (34a) and the lower switch (34b) of the first half-bridge (32a) and the upper switch (34c) and the lower switch (34d) of the second half-bridge (32b) are opened.

10. The method of claim 9,
wherein in a free-wheeling switching state (50), the upper auxiliary switch (34e) and the lower auxiliary (34f) switch are closed.

11. The method of claim 9 or 10,
wherein the electrical inverter (16) is switched, such that a free-wheeling switching state (50) is present between two positive and/or negative switching states.

12. The method of one of claims 9 to 11,
wherein the positive switching state (46), the negative switching state (48) and the free-wheeling switching state (50) are chosen according to pulse width modulation of a sinusoidal reference voltage.

13. A controller (44) for an electrical inverter (16) adapted for performing the method according to one of claims 9 to 12.

14. A photo-voltaic panel arrangement (10), comprising:
an electrical inverter (16) according to one of the previous claims;
at least one photo-voltaic panel (12) connected in parallel to the DC link (24).

15. A use of an electrical inverter (16) according to one of the previous claims for converting a DC voltage from at least one photo-voltaic panel (12) into an AC voltage supplied to an electric grid (22).
